(19) Europäisches Patentamt / European Patent Office / Office européen des brevets

(11) **EP 4 220 312 B1**

(12) **EUROPÄISCHE PATENTSCHRIFT**

(45) Veröffentlichungstag und Bekanntmachung des Hinweises auf die Patenterteilung:
**04.06.2025   Patentblatt 2025/23**

(21) Anmeldenummer: **23151122.1**

(22) Anmeldetag: **11.01.2023**

(51) Internationale Patentklassifikation (IPC):
*G05B 13/02* (2006.01)      *G05D 1/00* (2024.01)
*B66F 9/06* (2006.01)      *B66F 9/075* (2006.01)
*B66F 9/24* (2006.01)

(52) Gemeinsame Patentklassifikation (CPC):
**G05B 13/027; B66F 9/063; G05D 1/0221; G05D 1/0225; G05D 1/0248**

(54) **MOBILE VORRICHTUNG ZUM AUTOMATISIERTEN BEFÖRDERN VON LADUNGSTRÄGERN**

MOBILE DEVICE FOR THE AUTOMATED CONVEYANCE OF LOAD CARRIERS

DISPOSITIF MOBILE POUR LE TRANSPORT AUTOMATISÉ DE CHARGES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **31.01.2022   DE 102022102157**
**07.02.2022   DE 102022102799**

(43) Veröffentlichungstag der Anmeldung:
**02.08.2023   Patentblatt 2023/31**

(73) Patentinhaber: **STILL GmbH**
**22113 Hamburg (DE)**

(72) Erfinder:
• **HEIN, Benedikt**
**20259 Hamburg (DE)**

• **ABEL, Bengt**
**21335 Lüneburg (DE)**

(74) Vertreter: **Patentship Patentanwaltgesellschaft**
**Schertlinstraße 29**
**86159 Augsburg (DE)**

(56) Entgegenhaltungen:
**US-A1- 2019 101 917     US-A1- 2020 150 654**

• **ARDI TAMPUU ET AL: "A Survey of End-to-End Driving: Architectures and Training Methods", ARXIV.ORG, CORNELL UNIVERSITY LIBRARY, 201 OLIN LIBRARY CORNELL UNIVERSITY ITHACA, NY 14853, 2 March 2021 (2021-03-02), XP081894945, DOI: 10.1109/TNNLS.2020.3043505**

## Beschreibung

Die Erfindung betrifft eine mobile Vorrichtung, insbesondere einen mobilen Roboter zum automatisierten Befördern von Ladungsträgern, insbesondere einer Palette oder einer Gitterbox beispielsweise in einem Warenlager.

Für den Transport und die Lagerung von Produkten, Waren und Materialien werden oftmals Ladungsträger mit standardisierten Abmessungen, beispielsweise Gitterboxen oder Paletten, insbesondere Europaletten verwendet. Zur Handhabung derartiger Ladungsträger z.B. in der Intralogistik, d.h. dem innerbetrieblichen Materialfluss, z.B. in einem Warenlager, werden häufig teilweise automatisierte Flurförderzeuge, z.B. Gabelstapler, Industrieroboter und dergleichen eingesetzt. Hierzu weisen Flurförderzeuge in der Regel ein Lastaufnahmemittel, beispielsweise zwei Lastgabeln auf, die in entsprechende Einschuböffnungen des Ladungsträgers eingeschoben werden können, um diesen aufzunehmen. Wenn dies mit automatisierten Flurförderzeugen bzw. Robotern erfolgen soll, muss das Flurförderzeug bzw. der Roboter den Ladungsträger, dessen Pose und die Einschuböffnungen des Ladungsträgers erkennen und sich derart relativ zu dem Ladungsträger bewegen und orientieren, dass das Lastaufnahmemittel entsprechend in die Einschuböffnungen des Ladungsträgers eingeschoben und der Ladungsträger somit befördert werden kann.

Der vorliegenden Erfindung liegt die Aufgabe zugrunde, eine mobile Vorrichtung zum automatisierten Befördern eines Ladungsträgers, insbesondere einer Palette oder einer Gitterbox, bereitzustellen.

Die US 2019/101917 A1 betrifft eine Vorhersage eines Zustands eines Objekts in einer Umgebung unter Verwendung eines Aktionsmodells eines neuronalen Netzwerks.

Diese Aufgabe wird gemäß einem ersten Aspekt der Erfindung dadurch gelöst, dass die mobile Vorrichtung zum automatisierten Befördern eines Ladungsträgers wenigstens einen Bewegungsaktuator umfasst, der ausgebildet ist, mittels Steuerungsdaten angesteuert zu werden, um die mobile Vorrichtung zu bewegen, wobei die mobile Vorrichtung ausgebildet ist, sich mittels des wenigstens einen Bewegungsaktuators relativ zu dem zu befördernden Ladungsträger zu bewegen und zu orientieren, eine Bilderfassungseinrichtung zum Erfassen einer Vielzahl von Bildern eines Ausschnitts einer Umgebung der mobilen Vorrichtung zu unterschiedlichen Zeitpunkten, wenigstens einen LiDAR-Sensor zum Erfassen von LiDAR-Daten in der Umgebung der mobilen Vorrichtung und einen Prozessor, welcher ausgebildet ist, ein mittels Reinforcement Learning, RL-trainiertes neuronales Netzwerk zu implementieren, wobei das RL-trainierte neuronale Netzwerk ausgebildet ist, auf der Grundlage der Vielzahl von Bildern, der LiDAR-Daten, einer Vielzahl von vergangenen Steuerungsdaten (d.h. in der Vergangenheit bestimmten Steuerungsdaten) und einer für die Vielzahl von vergangenen Steuerungsdaten bestimmten Vielzahl von vergangenen Belohnungen (d.h. in der Vergangenheit bestimmten Belohnungen) die Steuerungsdaten zum Ansteuern des wenigstens einen Bewegungsaktuators für den jetzigen Zeitpunkt zu bestimmen, um die mobile Vorrichtung zu bewegen.

Gemäß einer Ausführungsform ist der Prozessor ferner ausgebildet, ein weiteres RL-trainiertes neuronales Netzwerk zu implementieren, wobei das weitere RL-trainierte neuronale Netzwerk ausgebildet ist, auf der Grundlage der Vielzahl von Bildern, der LiDAR-Daten, der Vielzahl von vergangenen Steuerungsdaten und der Vielzahl von vergangenen Belohnungen einen Q-Wert zu bestimmen.

In einer Ausführungsform umfasst das RL-trainierte neuronale Netzwerk ein Subnetzwerk und das weitere RL-trainierte neuronale Netzwerk umfasst ebenfalls das Subnetzwerk, welches ausgebildet ist, auf der Grundlage der Vielzahl von Bildern einen Feature-Vektor zu erzeugen.

Gemäß einer Ausführungsform ist der Prozessor ausgebildet in einem ersten Trainingsabschnitt das Subnetzwerk vorzutrainieren und in einem anschließenden zweiten Trainingsabschnitt das komplette RL-trainierte neuronale Netzwerk und das komplette weitere RL-trainierte neuronale Netzwerk zu trainieren.

In einer Ausführungsform ist der Prozessor im zweiten Trainingsabschnitt ausgebildet, das RL-trainierte neuronale Netzwerk mittels Aufgaben (auch als "Tasks" bezeichnet) zu trainieren, welche vom Prozessor auf der Grundlage des weiteren RL-trainierten neuronalen Netzwerk ausgewählt werden.

Gemäß einer Ausführungsform ist der Prozessor ferner ausgebildet, ein weiteres neuronales Netzwerk zu implementieren, wobei das weitere neuronale Netzwerk ausgebildet ist, auf der Grundlage des Q-Werts eine Erfolgswahrscheinlichkeit der Steuerungsdaten zum Ansteuern des wenigstens einen Bewegungsaktuators zu bestimmen.

In einer Ausführungsform ist das weitere neuronale Netzwerk ausgebildet, auf der Grundlage des Q-Werts und einem oder mehreren geometrischen Parametern der Aufgabe die Erfolgswahrscheinlichkeit der Steuerungsdaten zum Ansteuern des wenigstens einen Bewegungsaktuators zu bestimmen.

In einer Ausführungsform ist der Prozessor ausgebildet, den wenigstens einen Bewegungsaktuator mit den Steuerungsdaten anzusteuern, falls die Erfolgswahrscheinlichkeit der Steuerungsdaten größer als ein vordefinierter Schwellenwert ist.

Gemäß einer Ausführungsform ist der Prozessor ausgebildet, die mobile Vorrichtung zum Stillstand zu bringen, falls die Erfolgswahrscheinlichkeit der Steuerungsdaten kleiner als ein vordefinierter Schwellenwert ist.

In einer Ausführungsform ist der Prozessor ausgebildet, das RL-trainierte neuronale Netzwerk auf der Grundlage eines "Soft-Actor Critic"-Algorithmus zu trainieren.

Weitere Vorteile und Einzelheiten der Erfindung werden anhand der in den schematischen Figuren dargestellten Ausführungsbeispiele näher erläutert. Hierbei zeigt

Figur 1 eine schematische Darstellung einer mobilen Vorrichtung zum automatisierten Befördern eines Ladungsträgers gemäß einer Ausführungsform;

Figur 2a eine schematische Darstellung der Architektur eines neuronalen Netzwerkes einer mobilen Vorrichtung zum automatisierten Befördern eines Ladungsträgers gemäß einer Ausführungsform;

Figur 2b eine schematische Darstellung der Architektur eines weiteren neuronalen Netzwerkes einer mobilen Vorrichtung zum automatisierten Befördern eines Ladungsträgers gemäß einer Ausführungsform;

Figur 2c eine schematische Darstellung der Architektur eines Subnetzwerks der neuronalen Netzwerke von Figur 2a und 2b; und

Figur 3 eine schematische Darstellung der Architektur eines weiteren neuronalen Netzwerkes einer mobilen Vorrichtung zum automatisierten Befördern eines Ladungsträgers gemäß einer Ausführungsform.

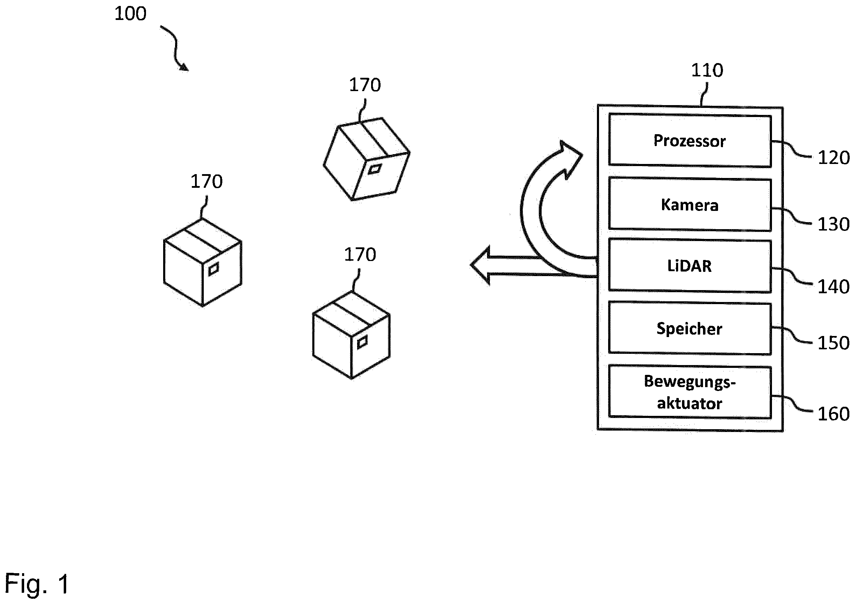

Figur 1 zeigt eine schematische Darstellung einer mobilen Vorrichtung 110 zum automatisierten Befördern eines Ladungsträgers 170 gemäß einer Ausführungsform. Unter einem Ladungsträger 170 können Hilfsmittel verstanden werden, die dazu dienen, eine Ladung, insbesondere umfassend eine oder mehrere Packungen, insbesondere Verpackungseinheiten, zu einer Ladungseinheit zusammenzufassen. Beispielsweise kann ein Karton, eine Kiste, eine Palette, eine Gitterbox, ein Container, eine austauschbare Wechselbrücke, ein Regalelement oder dergleichen ein Ladungsträger 170 sein. Bei der mobilen Vorrichtung 110 kann es sich insbesondere um einen Industrieroboter 110 oder ein autonomes bzw. automatisiertes Flurförderzeug 110 handeln, beispielsweise ein für den fahrerlosen und/oder autonom agierenden Betrieb ausgebildetes Flurförderzeug. Bei dem Industrieroboter kann es sich insbesondere um einen Kommissionierroboter handeln.

Wie in Figur 1 angedeutet, ist die mobile Vorrichtung 110 dazu ausgebildet, sich autonom zu bewegen, beispielsweise in einem Warenlager 100 mit einer Vielzahl von Ladungsträgern 170, die mit unterschiedlichen Orientierungen an unterschiedlichen Positionen des Warenlagers 100 angeordnet sein können. In einer Ausführungsform umfasst die mobile Vorrichtung 110 einen oder mehrere Bewegungsaktuatoren 160 sowie entsprechende Antriebe zum Bewegen der mobilen Vorrichtung 110. In einer Ausführungsform umfassen die Bewegungsaktuatoren 160 der mobilen Vorrichtung 110 beispielsweise eine Vielzahl von Rädern, die von einem Motor mittels einer Steuereinheit der mobilen Vorrichtung 110 angetrieben werden können. Erfindungsgemäß ist die mobile Vorrichtung 110 ausgebildet, mittels der Bewegungsaktuatoren 160 beispielsweise eine Linearbewegung und eine Drehbewegung durchzuführen, um sich relativ zu einem zu befördernden Ladungsträger 170 bewegen und orientieren zu können.

Die mobile Vorrichtung 110 umfasst ferner eine Bilderfassungseinrichtung 130, insbesondere eine 2D-Kamera 130, zum Erfassen einer Vielzahl von Bilddaten der sich aufgrund der Bewegung ändernden Umgebung der mobilen Vorrichtung 110 und wenigstens einen LiDAR-Sensor 140 zum Erfassen von LiDAR-Daten in der Umgebung der mobilen Vorrichtung 110. In einer Ausführungsform ist der wenigstens eine LiDAR-Sensor 140 ausgebildet, LiDAR-Daten in der horizontalen Ebene, d.h. der Bewegungsebene der mobilen Vorrichtung 110 zu erfassen. In einer Ausführungsform ist der wenigstens eine LiDAR-Sensor 140 ausgebildet, LiDAR-Daten in einem Winkelbereich von 360° oder einem Ausschnitt davon um die mobile Vorrichtung 110 herum zu erfassen.

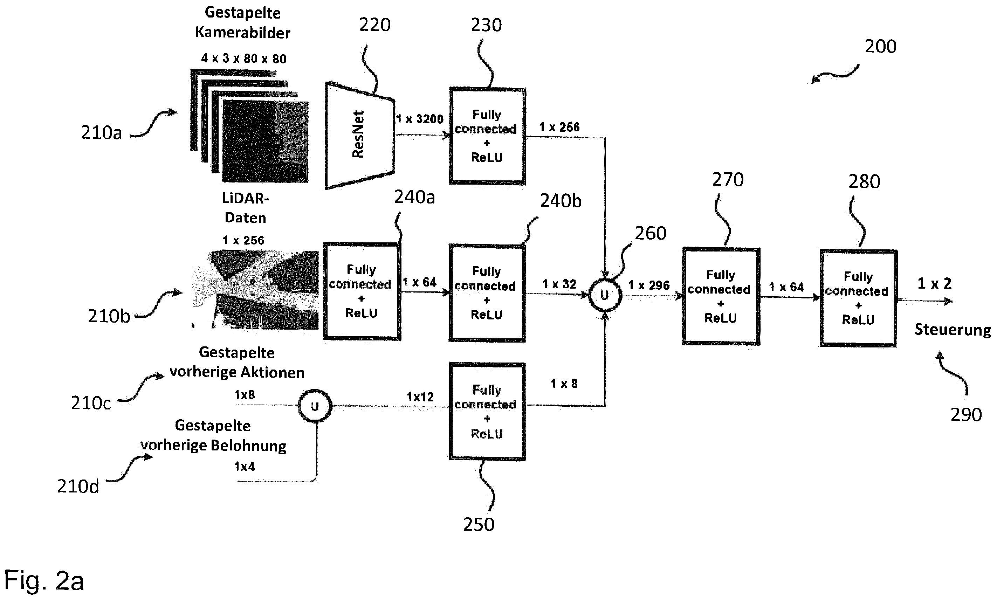

Die mobile Vorrichtung 110 umfasst ferner wenigstens einen Prozessor 120, welcher ausgebildet ist, auf der Grundlage der von der Kamera 130 erfassten Bilddaten und der von dem wenigstens einen LiDAR-Sensor 140 erfassten LiDAR-Daten die Bewegung der mobilen Vorrichtung 110 mittels den Bewegungsaktuatoren 160 zu steuern, wie dies nachstehend unter weiterer Bezugnahme auf die Figuren 2a-c im Detail beschrieben wird.

In einer Ausführungsform kann die mobile Vorrichtung 110 zum automatisierten Befördern eines Ladungsträgers 170 ferner einen nichtflüchtigen Speicher 150, beispielsweise einen Flash-Speicher 150 umfassen. Der nichtflüchtige Speicher 150 ist ausgebildet, Daten und ausführbaren Programmcode zu speichern, der, wenn dieser von dem Prozessor 120 der mobilen Vorrichtung 110 ausgeführt wird, den Prozessor 120 veranlasst, die im Folgenden beschriebenen Funktionen, Operationen und Verfahren durchzuführen.

Figur 2a zeigt die Architektur eines von dem wenigstens einen Prozessor 120 implementierten künstlichen neuronalen Netzwerkes (hierin auch kurz als "neuronales Netz" bezeichnet) 200 gemäß einer Ausführungsform. Das in Figur 2a dargestellte neuronale Netzwerk 200 ist ausgebildet, in einer Anwendungsphase der mobilen Vorrichtung 110 auf der Grundlage einer Vielzahl von laufend erfassten Eingangsdaten 210a-d Steuerungsdaten 290 zum Ansteuern der Bewegungsaktuatoren 160 zu bestimmen, die es der mobilen Vorrichtung 110 ermöglichen, sich relativ zu einem zu befördernden Ladungsträger 170 zu bewegen und auszurichten und diesen aufzunehmen.

Wie dies nachstehend detaillierter beschrieben wird, beruht die Architektur des neuronalen Netzes 200 von Figur 2a auf Konzepten, Algorithmen und Verfahren des maschinellen Lernens, die als bestärkendes Lernen oder verstärkendes Lernen ("Reinforcement Learning") bekannt sind und bei denen ein Agent (in diesem Fall die mobile Vorrichtung 110) selbstständig eine Strategie (auch als "Policy" bezeichnet) erlernt, um erhaltene Belohnungen (auch als "Rewards" bezeichnet) zu maximieren. Dabei wird dem Agenten nicht vorgezeigt, welche Aktion in welcher Situation (auch als "Task" bezeichnet) die beste ist, sondern er erhält durch die Interaktion mit seiner Umgebung zu bestimmten Zeitpunkten eine Belohnung, die auch negativ sein kann.

Beim Reinforcement Learning wird die Interaktion eines lernenden Agenten (in diesem Fall die mobile Vorrichtung 110) mit seiner Umgebung betrachtet, die beispielsweise durch die Vielzahl von Ladungsträgern 170 definiert wird. Letztere ist dabei als Markow-Entscheidungsproblem formuliert. So definiert die Umgebung eine Menge von Zuständen (auch als "States" bezeichnet). Der Agent, d.h. die mobile Vorrichtung 110 kann situativ eine Aktion aus einer Menge von verfügbaren Aktionen wählen, beispielsweise eine durch Steuerungsdaten 290 definierte Linear- und/oder Rotationsbewegung, wodurch er in einen Folgezustand gelangt und eine Belohnung erhält.

Beim Reinforcement Learning ist es das Ziel des Agenten, d.h. der mobilen Vorrichtung 110, den für die Zukunft erwarteten Gewinn zu maximieren, der sich aus den Belohnungen für die zukünftigen Zeitschritte zusammensetzt. Der erwartete Gewinn ist also so etwas wie die erwartete Gesamtbelohnung. Dabei kann ein Diskontierungsfaktor verwendet werden, der zukünftige Belohnungen gewichtet. Bei episodischen Problemen, d. h. das Gesamtsystem geht nach einer endlichen Anzahl von Schritten in einen Endzustand über, kann der Diskontierungsfaktor weggelassen werden. In diesem Fall wird die Belohnung zu jedem Zeitschritt gleich gewertet. Bei kontinuierlichen Problemen kann ein geeigneter Diskontierungsfaktor gewählt werden, damit der erwartete Gewinn konvergiert. Zu diesem Zweck verfolgt der Agent, d.h. die mobile Vorrichtung 110 eine Strategie (auch als "Policy" bezeichnet), die der Agent laufend verbessert. Üblicherweise wird die Strategie als eine Funktion betrachtet, die jedem Zustand eine Aktion zuweist. Jedoch sind auch nichtdeterministische Strategien (oder gemischte Strategien) möglich, so dass eine Aktion mit einer bestimmten Wahrscheinlichkeit ausgewählt wird. Weitere Details zu Reinforcement Learning werden in dem Buch "Reinforcement Learning: An Introduction", Richard S. Sutton und Andrew G. Barto beschrieben, auf das hiermit vollumfänglich Bezug genommen wird.

Bei der in Figur 2a dargestellten Ausführungsform umfassen die Eingangsdaten des neuronalen Netzwerks 200 die vier letzten, d.h. jüngsten von der Kamera 130 erfassten Bilder bzw. Bilddaten 210a der Umgebung der mobilen Vorrichtung 110 sowie die von dem wenigstens eine LiDAR-Sensor 140 erfassten aktuellen LiDAR-Daten 210b der Umgebung der mobilen Vorrichtung 110. In einer Ausführungsform ist die Kamera 130 ausgebildet, in zeitlich konstanten Intervallen ein jeweiliges Bild der Umgebung der mobilen Vorrichtung 110 zu erfassen. Beispielsweise kann in einer Ausführungsform das Intervall zwischen zwei zeitlich aufeinander folgenden Bildern ca. 180 ms betragen. Bei dieser beispielhaften Ausführungsform kann somit alle 180 ms ein neuer Zustand betrachtet werden. Die gemäß einer Ausführungsform für einen Zustand verwendeten Bilddaten 210a sind dann das aktuelle Bild sowie die vor 180 ms, 360 ms und 540 ms erfassten Bilder.

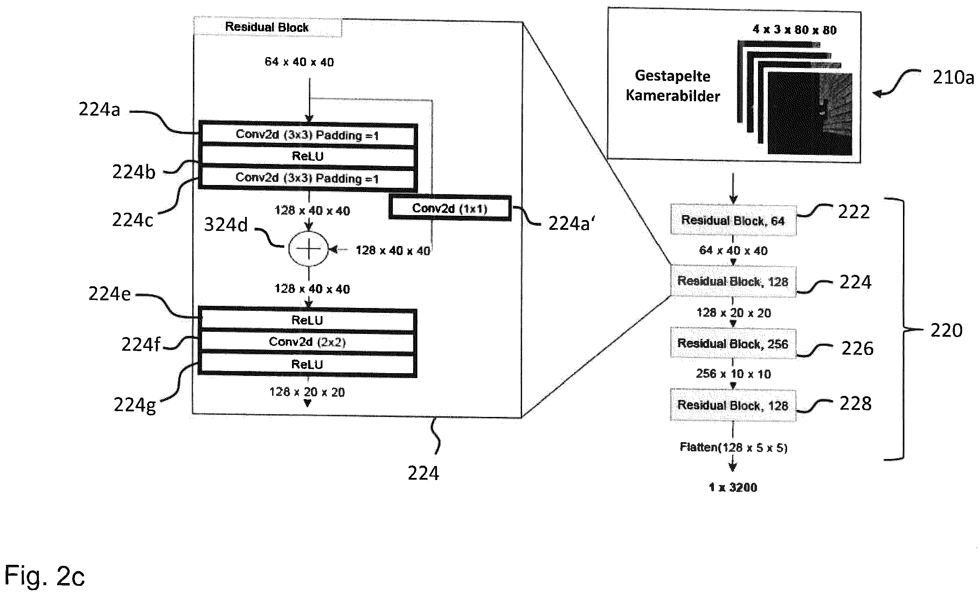

Wie in Figur 2a dargestellt, können die vier letzten, d.h. jüngsten von der Kamera 130 erfassten Bilder bzw. Bilddaten 210a gestapelt werden, um ein mehrdimensionales Bilddatenarray (bzw. einen Bilddatentensor) 210a zu generieren, welches in der Ausführungsform von Figur 2a aus den vier jüngsten Bildern mit jeweils drei Farbkanälen und einer beispielhaften Bildauflösung von 80x80 Pixeln besteht. Wie dies nachstehend detaillierter im Zusammenhang mit Figur 2c beschrieben wird, umfasst das neuronale Netzwerk 200 ein Subnetzwerk 220 (als "Custom ResNet" in Figur 2a gekennzeichnet), welches ausgebildet ist, auf der Grundlage des mehrdimensionalen Bilddatenarrays 210a einen ersten Feature-Vektor mit beispielhaft 3200 Komponenten zu erzeugen. Für diesen ersten Feature-Vektor der Bilddaten 210a mit 3200 Komponenten wird auf im Wesentlichen bekannte Art und Weise von einem Subnetzwerk 230 mit einem "Fully connected"-Layer und einem ReLU-Layer ein zweiter Feature-Vektor der Bilddaten 210a mit 256 Komponenten erstellt.

Die von dem wenigstens einen LiDAR-Sensor 140 erfassten LiDAR-Daten 210b können, wie in Figur 2a beispielhaft dargestellt, als ein Datenvektor mit 256 Komponenten in das neuronale Netzwerk 200 eingespeist werden, wobei jede der Komponenten des Datenvektors beispielsweise einer Richtung, d.h. einem Richtungswinkel in der horizontalen Ebene entspricht. In einer Ausführungsform ist der wenigstens eine LiDAR-Sensor 140 ausgebildet, in zeitlich konstanten Intervallen jeweilige LiDAR-Daten 210b der Umgebung der mobilen Vorrichtung 110 zu erfassen. Beispielsweise kann in einer Ausführungsform das Intervall zwischen zeitlich aufeinander folgenden LiDAR-Daten 210b ca. 180 ms betragen (im Einklang mit dem Abtastintervall der Kamera 130). Für die aktuellen LiDAR-Daten 210b in Form des LiDAR-Datenvektors mit 256 Komponenten wird auf im Wesentlichen bekannte Art und Weise von einem ersten Subnetzwerk 240a mit einem "Fully connected"-Layer und einem ReLU-Layer und einem zweiten Subnetzwerk 240b mit einem "Fully connected"-Layer und einem ReLU-Layer zunächst ein erster Feature-Vektor der LiDAR-Daten 210b mit 64 Komponenten und sodann ein zweiter Feature-Vektor der LiDAR-Daten 210b mit 32 Komponenten erstellt.

Neben den von der Kamera 130 erfassten Bilddaten 210a und den von dem wenigstens einen LiDAR-Sensor 140 erfassten LiDAR-Daten 210b umfassen die Eingangsdaten des neuronalen Netzwerks 200 von Figur 2a ferner die vier letzten Aktionen 210c, d.h. die bei vier vorherigen Zeitpunkten bestimmten Steuerungsdaten 210c zum Ansteuern der Bewegungsaktuatoren 160 sowie die für diese vier letzten Aktionen 210c bestimmten Rewards (Belohnungen) 210d (wie diese Rewards bestimmt werden können, wird nachstehend im Detail beschrieben). In einer Ausführungsform können die Steuerungsdaten 210c zum Ansteuern der Bewegungsaktuatoren 160 jeweils beispielsweise eine Lineargeschwindigkeit und eine Drehgeschwindigkeit umfassen.

Wie in Figur 2a dargestellt, ist das neuronale Netzwerk 200 ausgebildet, die bei den vier vorherigen Zeitpunkten bestimmten Steuerungsdaten 210c zum Ansteuern der Bewegungsaktuatoren 160 und die entsprechenden Rewards 210d zu einem Datenvektor zusammen zu fassen, der in der Ausführungsform von Figur 2a beispielhaft zwölf Komponenten aufweist, also die Dimensionen 1x12 hat. Für diesen Datenvektor mit 12 Komponenten wird auf im Wesentlichen bekannte Art und Weise von einem Subnetzwerk 250 mit einem "Fully connected"-Layer und einem ReLU-Layer ein Feature-Vektor der Aktionen, d.h. der Steuerungsdaten und der Rewards mit 8 Komponenten erstellt.

In einer Ausführungsform ist der Prozessor 120 der mobilen Vorrichtung 110 ausgebildet, eine Belohnung bzw. Reward zu jedem Zeitschritt zu bestimmen. In einer Ausführungsform ist der Prozessor 120 der mobilen Vorrichtung 110 ausgebildet, eine Belohnung bzw. Reward zu jedem Zeitschritt t auf der Grundlage der folgenden Gleichung zu bestimmen, die eine Summe aus mehreren Teilrewards darstellt:

$$r(t) = r_{S}(t) + r_{CD}(t) + r_{C}(t) + r_{G}(t) + r_{F}(t).$$

In einer Ausführungsform hat der Teilreward $r_{S}(t)$ den konstanten Wert 0.1 und bleibt somit gleich für jeden Zeitschritt t. In einer Ausführungsform hat der Teilreward $r_{CD}(t)$ den Wert -0.1, falls für den Zeitschritt t eine Kollision mit dem zu befördernden Ladungsträger 170 festgestellt wird, ansonsten den Wert 0. In einer Ausführungsform hat der Teilreward $r_{C}(t)$ den Wert -10, falls eine Kollision der mobilen Vorrichtung 110 mit irgendeinem Gegenstand außer dem zu befördernden Ladungsträger 170 im Zeitschritt t festgestellt wird, ansonsten den Wert 0. In einer Ausführungsform hat der Teilreward $r_{G}(t)$ den Wert 10, falls im Zeitschritt t die Aufgabe erfolgreich abgeschlossen wird, d.h. der zu befördernde Ladungsträger 170 aufgenommen worden ist, ansonsten den Wert 0. In einer Ausführungsform hat der Teilreward $r_{F}(t)$ den Wert -0.05, falls die mobile Vorrichtung 110 nicht in eine durch die Kamera 130 definierte Vorwärtsrichtung fährt, ansonsten den Wert 0.

Bei der in Figur 2a dargestellten Ausführungsform umfasst das neuronale Netzwerk 200 ferner eine Einrichtung 260, welche ausgebildet ist, den zweiten Feature-Vektor der Bilddaten 210a mit 256 Komponenten, den zweiten Feature-Vektor der LiDAR-Daten 210b mit 32 Komponenten und den Feature-Vektor der Aktionen und Rewards mit 8 Komponenten miteinander zu konkatenieren, um einen Gesamt-Feature-Vektor mit 296 Komponenten zu erstellen, der, wie der Fachmann erkennt, Informationen über die Bilddaten 210a, die LiDAR-Daten 210b, die Aktionen 210c und Rewards 210d enthält, und zwar zumindest teilweise für mehrere Zeitpunkte in der Vergangenheit. Für diesen Gesamt-Feature-Vektor mit 296 Komponenten werden auf im Wesentlichen bekannte Art und Weise von einem ersten Subnetzwerk 270 mit einem "Fully connected"-Layer und einem ReLU-Layer zunächst ein komprimierter Gesamt-Feature-Vektor mit 64 Komponenten und sodann von einem zweiten Subnetzwerk 280 mit einem "Fully connected"-Layer und einem ReLU-Layer die Steuerungsdaten 290 zum Ansteuern der Bewegungsaktuatoren 160, d.h. die Aktionen für den nächsten Zeitschritt erstellt. Wie bereits vorstehend beschrieben, umfassen bei der in Figur 2a dargestellten Ausführungsform die Steuerungsdaten 290 zum Ansteuern der Bewegungsaktuatoren 160 beispielhaft zwei Komponenten, nämliche eine Komponente für eine Linearbewegung und eine Komponente für eine Drehbewegung der mobilen Vorrichtung 110.

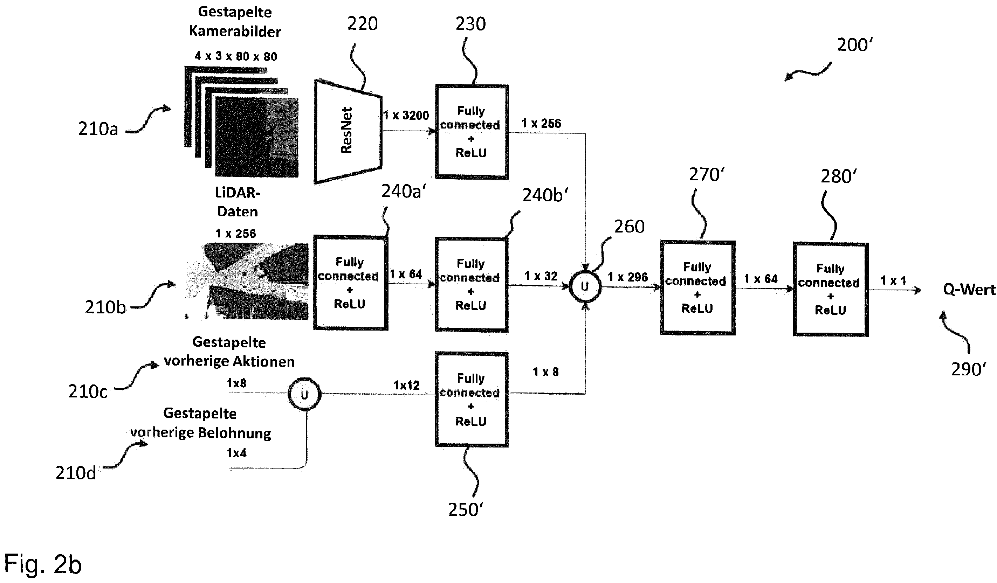

In einer Ausführungsform ist der Prozessor 120 der mobilen Vorrichtung 110 ausgebildet, ein weiteres neuronales Netzwerk 200' zur Bestimmung eines Q-Werts 290' zu implementieren, dessen Architektur in Figur 2b dargestellt ist. Wie dies dem mit Reinforcement Learning vertrauten Fachmann bekannt ist, stellt der Q-Wert 290' eine Abschätzung für den kumulierten Reward dar, der aufgrund der durch das neuronale Netzwerk 200 von Figur 2a bestimmen Steuerungsdaten 290 zum Ansteuern der Bewegungsaktuatoren 160 zukünftig erzielt wird. Eine mathematisch exakte Definition des Q-Werts 290' wird in dem bereits vorstehend zitierten Buch "Reinforcement Learning: An Introduction", Richard S. Sutton and Andrew G. Barto beschrieben, auf das hiermit vollumfänglich Bezug genommen wird.

Bei der in Figur 2b dargestellten Ausführungsform des neuronalen Netzes 200' zur Bestimmung des Q-Werts 290' sind die Eingangsdaten und die Architektur des neuronalen Netzwerkes 200' identisch zu den Eingangsdaten und der Architektur des neuronalen Netzwerkes 200 von Figur 2a zur Bestimmung der Steuerungsdaten 290 zum Ansteuern der Bewegungsaktuatoren 160. In dieser Ausführungsform unterscheiden sich die beiden neuronalen Netzwerke 200 und 200' lediglich dadurch, dass die Gewichte der einzelnen Subnetzwerke unterschiedlich sein können und dass das Subnetzwerk 280 zwei Ausgabewerte erzeugt, nämlich die Steuerungsdaten 290 zum Ansteuern der Bewegungsaktuatoren 160, und das Subnetzwerk 280' einen Ausgabewert liefert, nämlich den Q-Wert 290'. In einer Ausführungsform können das neuronale Netz 200 von Figur 2a und das neuronale Netz 200' von Figur 2b das gleiche Subnetzwerk ("Custom ResNet") 220, d.h. mit der gleichen Architektur und den gleichen Gewichten verwenden. Wie dies nachstehend im Detail beschrieben wird, kann das Subnetzwerk ("Custom ResNet") 220 in einer Ausführungsform vortrainiert sein.

Figur 2c zeigt die Architektur des Subnetzwerkes ("Custom ResNet") 220 der in den Figuren 2a und 2b gezeigten neuronalen Netzwerke 200, 200' gemäß einer bevorzugten Ausführungsform. Wie bereits vorstehend beschrieben, ist das Subnetzwerk ("Custom ResNet") 220 ausgebildet, auf der Grundlage des mehrdimensionalen Bilddatenarrays 210a, welches Umgebungsinformation der mobilen Vorrichtung 110 zu unterschiedlichen Zeitpunkten in der Vergangenheit enthält, den ersten Feature-Vektor der Bilddaten 210a mit beispielhaft 3200 Komponenten zu erzeugen. Hierzu umfasst das Subnetzwerk ("Custom ResNet") 220 gemäß der Ausführungsform von Figur 2c mehrere aufeinander folgende Residual Blocks 222, 224, 226 und 228 mit unterschiedlichen Dimensionen, wobei durch eine Flatten-Funktion des Subnetzwerks ("Custom ResNet") 220 die mehrdimensionale Ausgabe des letzten Residual Blocks 228 in den ersten Feature-Vektor der Bilddaten 210a mit beispielhaft 3200 Komponenten umgewandelt wird.

Der generelle Aufbau der beim Subnetzwerk ("Custom ResNet") 220 zum Einsatz kommenden Residual Blocks 222, 224, 226, 228 ist aus dem Stand der Technik bekannt. Eine bevorzugte Ausführungsform ist in Figur 2c dargestellt, und zwar beispielhaft für den Residual Block 224. Wie bereits vorstehend erwähnt, können gemäß einer Ausführungsform die anderen Residual Blocks 222, 226 und 228 im Wesentlichen die gleiche Architektur wie der Residual Block 224 mit entsprechend angepassten Dimensionen aufweisen. Wie in Figur 2c dargestellt, umfasst der Residual Block 224 entlang eines ersten Teilpfades einen ersten Subblock, der einen Convolutional-Layer 224a (mit einem 3x3 Kernel und Padding), einen ReLU-Layer 224b und eine weiteren Convolutional-Layer 224c (mit einem 3x3 Kernel und Padding) umfasst und mittels diesen Layers ausgebildet ist, aus dem Eingangsdatenarray mit Dimensionen 64x40x40 ein Ausgangsdatenarray mit den Dimensionen 128x40x40 zu erzeugen. Entlang eines parallelen zweiten Teilpfades umfasst der Residual Block 224 einen Convolutional-Layer 224a (mit einem 1x1 Kernel), welcher ausgebildet ist, aus dem Eingangsdatenarray mit Dimensionen 64x40x40 ein Ausgangsdatenarray mit den Dimensionen 128x40x40 zu erzeugen. Der Residual Block 224 umfasst ferner einen Addierer 342d, welcher ausgebildet ist, das vom ersten Teilpfad erzeugte Ausgangsdatenarray mit den Dimensionen 128x40x40 mit dem vom zweiten Teilpfad erzeugte Ausgangsdatenarray mit den Dimensionen 128x40x40 zu kombinieren, insbesondere zu summieren. Der Residual Block 224 umfasst ferner einen zweiten Subblock, der einen ReLU-Layer 224e, einen Convolutional-Layer 224f (mit einem 2x2 Kernel und ohne Padding) und einen weiteren ReLU-Layer 224g umfasst und mittels diesen Layers ausgebildet ist, aus dem vom Addierer 324d bereitgestellten Datenarray mit Dimensionen 128x40x40 ein Ausgangsdatenarray mit den Dimensionen 128x20x20 zu erzeugen.

In einer Ausführungsform kann das in Figur 2c dargestellte Subnetzwerk ("Custom ResNet") 220 mittels eines dem Fachmann bekannten Autoencoders erstellt und trainiert werden. Ein solcher Autoencoder dient dazu, Eingangsdaten durch eine Funktion (den sogenannten Encoder) in komprimierte bzw. codierte Daten zu überführen (was als das Extrahieren von Features betrachtet werden kann) und anschließend die komprimierten Daten mittels einer weiteren Funktion (dem sogenannten Decoder) zu verarbeiten, um die ursprünglichen Eingangsdaten zu rekonstruieren. Falls der bei dieser Rekonstruktion auftretende Fehler gering ist, stellen die komprimierten bzw. kodierten Daten eine gute Repräsentation der Eingangsdaten dar (mit anderen Worten: die komprimierten bzw. kodierten Daten enthalten aussagekräftige Features der Eingangsdaten).

Bei dem in Figur 2c dargestellten Subnetzwerk ("Custom ResNet") 220 sind die Eingangsdaten die Bilddaten 210a und das Subnetzwerk ("Custom ResNet") 220 entspricht dem Encoder, der als komprimierte Daten den Feature- Vektor mit beispielhaft 3200 Komponenten erzeugt. Der in der Anwendungsphase nicht zum Einsatz kommende Decoder kann beispielsweise ein Convolutionary Neural Network sein.

In der Trainingsphase kann der aus Encoder und Decoder bestehende Autoencoder mit dem Ziel vortrainiert werden, den Rekonstruktionsfehler zu minimieren. In einer Ausführungsform kann zum Trainieren des Autoencoders und somit des Subnetzwerks ("Custom ResNet") 220 eine Datenbank mit Bildern verwendet werden, die während einer Vielzahl von zufälligen Bewegungen der mobilen Vorrichtung 110 in einer simulierten Umgebung zu unterschiedlichen Zeitpunkten (beispielsweise alle 180 ms) erfasst worden sind. Nachdem der Autoencoder auf diese Weise vortrainiert worden ist, wird gemäß einer Ausführungsform nur der nun bereits vortrainierte Encoder als das Subnetzwerk ("Custom ResNet") 220 für die in den Figuren 2a und 2b gezeigten neuronalen Netze 200, 200' verwendet. Mit dem so vortrainierten Subnetzwerk ("Custom ResNet") 220 können dann die anderen Subnetzwerke der in den Figuren 2a und 2b gezeigten neuronalen Netze 200, 200' zur Bestimmung der Steuerungsdaten 290 und des Q-Werts 290' schneller und effizienter trainiert werden.

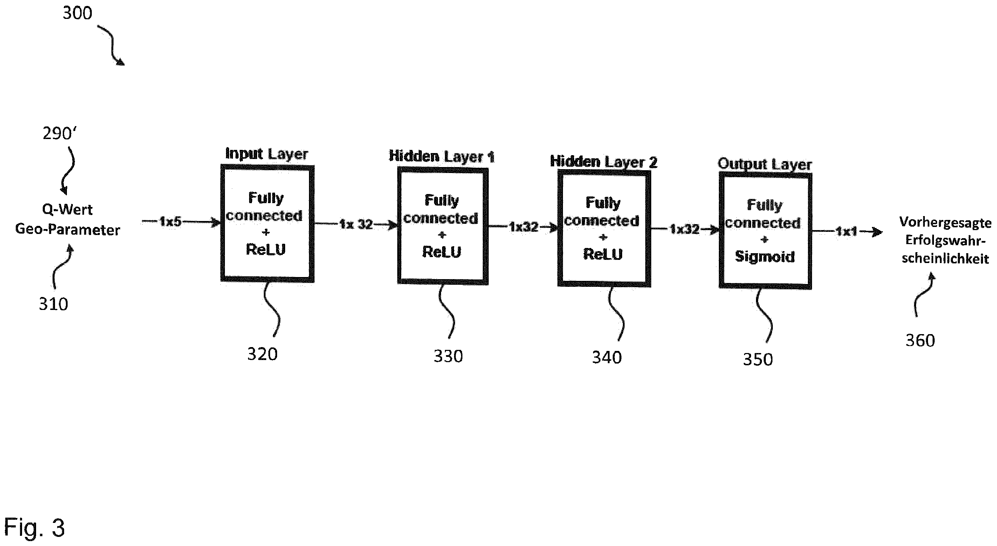

Figur 3 zeigt die Architektur eines weiteren neuronalen Netzwerkes 300, welches gemäß einer Ausführungsform von dem Prozessor 120 der mobilen Vorrichtung 110 implementiert ist. Das neuronale Netzwerk 300 ist ausgebildet, auf der Grundlage des von dem Netzwerk 200' von Figur 2b bestimmten Q-Werts 290' und einem oder mehreren weiteren geometrischen Parametern (auch als "geometrical properties" bezeichnet) 310 einer zu einem Zeitpunkt gegebenen Aufgabe, d.h. Task eine Erfolgswahrscheinlichkeit 360 der Aufgabe zu bestimmen. In einer Ausführungsform kann es sich bei den geometrischen Parametern 310 beispielsweise um einen Abstand zwischen der mobilen Vorrichtung 110 und dem zu befördernden Ladungsträger 170, einen Abstand zwischen der mobilen Vorrichtung 110 und einem nächstliegenden Hindernis, einen Abstand zwischen dem zu befördernden Ladungsträger 170 und einem nächstliegenden Hindernis und/oder einen relativen Winkel zwischen einer Referenzrichtung und der Richtung von der mobilen Vorrichtung 110 zu dem zu befördernden Ladungsträger 170 handeln. In einer Ausführungsform kann es sich bei den geometrischen Parametern 310 um einen oder mehrere der geometrischen Parameter handeln, die in dem Artikel von Morad et al "Embodied Visual Navigation with Automatic Curriculum Learning in Real Environments", IEEE Robotics and Automation Letters, 2020 als "geometric properties" beschrieben werden.

Wie in Figur 3 dargestellt, umfasst das neuronale Netzwerk 300 einen Input-Layer 320, einen ersten Hidden-Layer 330, einen zweiten Hidden-Layer 340 und einen Output-Layer 350. Dabei können gemäß einer Ausführungsform der Input-Layer 320, der erste Hidden-Layer 330 und der zweite Hidden-Layer 340 jeweils einen oder mehrere "Fully Connected"-Layers sowie einen oder mehrere ReLU-Layers aufweisen und der Output-Layer 350 einen oder mehrere "Fully Connected"-Layers sowie einen oder mehrere Sigmoid-Layers umfassen. Weitere Details einer möglichen Architektur des neuronalen Netzwerks 300 werden in dem Artikel von Morad et al "Embodied Visual Navigation with Automatic Curriculum Learning in Real Environments", IEEE Robotics and Automation Letters, 2020 beschrieben, auf das hiermit vollumfänglich Bezug genommen wird.

Wie der Fachmann erkennen wird, sind die Gewichte sowohl des neuronalen Netzes 200' zur Bestimmung des Q-Werts 290' als auch des neuronalen Netzes 300 zur Bestimmung der Erfolgswahrscheinlichkeit 360 vor dem Trainieren in der Regel zufällig verteilt. Beim Trainieren lernt das neuronale Netz 300 jedoch, dessen Eingangsgrößen, d.h. sowohl die geometrischen Parameter 310 als auch den Q-Wert 290' zu interpretieren und somit die Erfolgswahrscheinlichkeit 360 zu bestimmen. In einer Ausführungsform kann zum Trainieren des neuronalen Netzes 200' zur Bestimmung des Q-Werts 290' ein "Soft Actor-Critic"-Algorithmus verwendet werden. Wie dem Fachmann bekannt ist, handelt es sich bei einem "Soft Actor-Critic"-Algorithmus um einen "Deep RL"-Algorithmus, bei dem zum einen ein Netzwerk zum Bestimmen einer Policy, wie beispielsweise das Netzwerk 200 von Figur 2a, und zum anderen ein Netzwerk zum Bestimmen eines Q-Werts, wie beispielsweise das Netzwerk 200' von Figur 2b, zum Einsatz kommt. Weitere Details zu dem "Soft Actor-Critic"-Algorithmus werden in dem bereits vorstehend zitierten Buch "Reinforcement Learning: An Introduction", Richard S. Sutton and Andrew G. Barto beschrieben, auf das hiermit vollumfänglich Bezug genommen wird. Die in den Figuren 2a und 2b dargestellten neuronalen Netzwerke 200, 200' können jedoch auch mittels anderer "Deep RL"-Algorithmen trainiert werden.

Wenn gemäß einer Ausführungsform beispielsweise ein "Soft Actor-Critic"-Algorithmus zum Trainieren der neuronalen Netze 200, 200' verwendet wird, kann parallel dazu die dem in Figur 3 gezeigten neuronalen Netzwerk 300 zugrunde liegende Variante des NavACL-Algorithmus parallel ausgeführt werden, um zu bestimmen, welche Aufgabe, d.h. Task zu einem gegebenen Zeitpunkt am besten dazu geeignet ist, die neuronalen Netze 200, 200' zu trainieren. Weitere Details derartiger Algorithmen zum automatisierten "Curriculum Learning" (ACL) werden in dem bereits vorstehend zitierten Artikel von Morad et al "Embodied Visual Navigation with Automatic Curriculum Learning in Real Environments", IEEE Robotics and Automation Letters, 2020 beschrieben.

In einer Ausführungsform sind während der Anwendungsphase die Gewichte sowohl der neuronalen Netze 200, 200' zur Bestimmung der Steuerungsdaten 290 und des Q-Werts 290' als auch des neuronalen Netzes 300 zur Bestimmung der Erfolgswahrscheinlichkeit 360 konstant, d.h. gemäß einer Ausführungsform erfolgt nach dem Trainieren während der Anwendungsphase der mobilen Vorrichtung 110 kein Nachtrainieren. In einer alternativen Ausführungsform ist jedoch denkbar, dass auch während der Anwendungsphase der mobilen Vorrichtung zeitweilig oder fortlaufend ein Trainieren stattfindet, um beispielsweise die Gewichte eines oder mehrerer dieser Netze 200, 200' und 300 nachjustieren zu können.

Wie bereits vorstehend beschrieben, kann während der Anwendungsphase der mobilen Vorrichtung 110 mittels der beiden neuronalen Netze 200' und 300 für jede Task bzw. Aufgabe die Erfolgswahrscheinlichkeit 360 bestimmt werden. In einer Ausführungsform ist die mobile Vorrichtung 110 ausgebildet, zu einem gegebenen Zeitpunkt nur dann die Aktionen durchzuführen, d.h. die Steuerungsdaten 290 zum Ansteuern der Bewegungsaktoren 160 für die Bewegung der mobilen Vorrichtung 110 zu verwenden, wenn die mittels der beiden neuronalen Netze 200' und 300 ermittelte Erfolgswahrscheinlichkeit 360 einen Schwellenwert überschreitet. Andernfalls, d.h. falls die Erfolgswahrscheinlichkeit 360 zu gering ist, beispielsweise aufgrund von wahrscheinlichen Kollisionen der mobilen Vorrichtung 110 mit Ladungsträgern 170 oder anderen Hindernissen, kann die mobile Vorrichtung 110 ausgebildet sein, die entsprechende Aktion nicht durchzuführen und stattdessen ein Warnsignal beispielsweise an ein in dem Warenlager 100 installiertes Überwachungssystem zu senden.

**Patentansprüche**

1. Mobile Vorrichtung (110) zum automatisierten Befördern eines Ladungsträgers (170), wobei die mobile Vorrichtung (110) umfasst:

   wenigstens einen Bewegungsaktuator (160), der ausgebildet ist, mittels Steuerungsdaten (290) angesteuert zu werden, um die mobile Vorrichtung (110) zu bewegen, wobei die mobile Vorrichtung (110) ausgebildet ist, sich mittels des wenigstens einen Bewegungsaktuators (160) relativ zu dem zu befördernden Ladungsträger (170) zu bewegen und zu orientieren;
   eine Bilderfassungseinrichtung (130) zum Erfassen einer Vielzahl von Bildern (210a) eines Ausschnitts einer Umgebung der mobilen Vorrichtung (110) zu unterschiedlichen Zeitpunkten;

wenigstens einen LiDAR-Sensor (140) zum Erfassen von LiDAR-Daten (210b) in der Umgebung der mobilen Vorrichtung (110); und

einen Prozessor (120), welcher ausgebildet ist, ein mittels Reinforcement Learning, RL-trainiertes neuronales Netzwerk (200) zu implementieren, wobei das RL-trainierte neuronale Netzwerk (200) ausgebildet ist, auf der Grundlage der Vielzahl von Bildern (210a), der LiDAR-Daten (210b), einer Vielzahl von vergangenen Steuerungsdaten (210c) und einer für die Vielzahl von vergangenen Steuerungsdaten (210c) bestimmten Vielzahl von vergangenen Belohnungen (210d) die Steuerungsdaten (290) zum Ansteuern des wenigstens einen Bewegungsaktuators (160) zu bestimmen, um die mobile Vorrichtung (110) zu bewegen.

2. Mobile Vorrichtung (110) nach Anspruch 1, wobei der Prozessor (120) ferner ausgebildet ist, ein weiteres RL-trainiertes neuronales Netzwerk (200') zu implementieren, wobei das weitere RL-trainierte neuronale Netzwerk (200') ausgebildet ist, auf der Grundlage der Vielzahl von Bildern (210a), der LiDAR-Daten (210b), der Vielzahl von vergangenen Steuerungsdaten (210c) und der Vielzahl von vergangenen Belohnungen (210d) einen Q-Wert (290') zu bestimmen.

3. Mobile Vorrichtung (110) nach Anspruch 2, wobei das RL-trainierte neuronale Netzwerk (200) ein Subnetzwerk (220) umfasst und das weitere RL-trainierte neuronale Netzwerk (200') das Subnetzwerk (220) umfasst, welches ausgebildet ist, auf der Grundlage der Vielzahl von Bildern (210a) einen Feature-Vektor zu erzeugen.

4. Mobile Vorrichtung (110) nach Anspruch 3, wobei der Prozessor (120) ausgebildet ist, in einem ersten Trainingsabschnitt das Subnetzwerk (220) zu trainieren und in einem zweiten Trainingsabschnitt das RL-trainierte neuronale Netzwerk (200) und das weitere RL-trainierte neuronale Netzwerk (200') zu trainieren.

5. Mobile Vorrichtung (110) nach Anspruch 4, wobei im zweiten Trainingsabschnitt der Prozessor (120) ausgebildet ist, das RL-trainierte neuronale Netzwerk (200) mittels Aufgaben zu trainieren, welche auf der Grundlage des weiteren RL-trainierten neuronalen Netzwerk (200') ausgewählt werden.

6. Mobile Vorrichtung (110) nach einem der Ansprüche 2 bis 5, wobei der Prozessor (120) ferner ausgebildet ist, ein weiteres neuronales Netzwerk (300) zu implementieren, wobei das weitere neuronale Netzwerk (300) ausgebildet ist, auf der Grundlage des Q-Werts (290') eine Erfolgswahrscheinlichkeit (360) der Steuerungsdaten (290) zum Ansteuern des wenigstens einen Bewegungsaktuators (160) zu bestimmen.

7. Mobile Vorrichtung (110) nach Anspruch 6, wobei das weitere neuronale Netzwerk (300) ausgebildet ist, auf der Grundlage des Q-Werts (290') und einem oder mehreren geometrischen Parametern (310) die Erfolgswahrscheinlichkeit (360) der Steuerungsdaten (290) zum Ansteuern des wenigstens einen Bewegungsaktuators (160) zu bestimmen.

8. Mobile Vorrichtung (110) nach Anspruch 6 oder 7, wobei der Prozessor (120) ausgebildet ist, den wenigstens einen Bewegungsaktuator (160) mit den Steuerungsdaten (290) anzusteuern, falls die Erfolgswahrscheinlichkeit (360) der Steuerungsdaten (290) größer als ein vordefinierter Schwellenwert ist.

9. Mobile Vorrichtung (110) nach einem der Ansprüche 6 bis 8, wobei der Prozessor (120) ausgebildet ist, die mobile Vorrichtung (110) zum Stillstand zu bringen, falls die Erfolgswahrscheinlichkeit (360) der Steuerungsdaten (290) kleiner als ein vordefinierter Schwellenwert ist.

10. Mobile Vorrichtung (110) nach einem der vorher gehenden Ansprüche, wobei der Prozessor (120) ausgebildet ist, das RL-trainierte neuronale Netzwerk (200) auf der Grundlage eines "Soft-Actor Critic"-Algorithmus zu trainieren.

## Claims

1. Mobile apparatus (110) for the automated transport of a load carrier (170), wherein the mobile apparatus (110) comprises:

at least one movement actuator (160) configured to be controlled by means of control data (290) to move the mobile apparatus (110), wherein the mobile apparatus (110) is configured to move and orient itself by means of the at least one movement actuator (160) relative to the load carrier (170) to be transported;

an image capture device (130) for capturing a multiplicity of images (210a) of a section of an environment of the mobile apparatus (110) at different times;

at least one LiDAR sensor (140) for capturing LiDAR data (210b) in the environment of the mobile apparatus (110); and

a processor (120) configured to implement a neural network (200) trained by means of reinforcement learning, RL, wherein the RL-trained neural network (200) is configured to determine, on the basis of the multiplicity of images (210a), the LiDAR data (210b), a multiplicity of past control data items (210c) and a multiplicity of past rewards (210d) determined for the multiplicity of past control data items (210c), the control data (290) for controlling the at least one movement actuator (160) to move the mobile apparatus (110).

2. Mobile apparatus (110) according to Claim 1, wherein the processor (120) is also configured to implement a further RL-trained neural network (200'), wherein the further RL-trained neural network (200') is configured to determine a Q-value (290') on the basis of the multiplicity of images (210a), the LiDAR data (210b), the multiplicity of past control data items (210c) and the multiplicity of past rewards (210d).

3. Mobile apparatus (110) according to Claim 2, wherein the RL-trained neural network (200) comprises a subnetwork (220) and the further RL-trained neural network (200') comprises the subnetwork (220), which is configured to generate a feature vector on the basis of the multiplicity of images (210a).

4. Mobile apparatus (110) according to Claim 3, wherein the processor (120) is configured to train the subnetwork (220) in a first training section and to train the RL-trained neural network (200) and the further RL-trained neural network (200') in a second training section.

5. Mobile apparatus (110) according to Claim 4, wherein, in the second training section, the processor (120) is configured to train the RL-trained neural network (200) by means of tasks selected on the basis of the further RL-trained neural network (200').

6. Mobile apparatus (110) according to one of Claims 2 to 5, wherein the processor (120) is also configured to implement a further neural network (300), wherein the further neural network (300) is configured to determine, on the basis of the Q-value (290'), a probability of success (360) of the control data (290) for controlling the at least one movement actuator (160).

7. Mobile apparatus (110) according to Claim 6, wherein the further neural network (300) is configured to determine, on the basis of the Q-value (290') and one or more geometric parameters (310), the probability of success (360) of the control data (290) for controlling the at least one movement actuator (160).

8. Mobile apparatus (110) according to Claim 6 or 7, wherein the processor (120) is configured to control the at least one movement actuator (160) with the control data (290) if the probability of success (360) of the control data (290) is greater than a predefined threshold value.

9. Mobile apparatus (110) according to one of Claims 6 to 8, wherein the processor (120) is configured to bring the mobile apparatus (110) to a standstill if the probability of success (360) of the control data (290) is less than a predefined threshold value.

10. Mobile apparatus (110) according to one of the preceding claims, wherein the processor (120) is configured to train the RL-trained neural network (200) on the basis of a "soft actor-critic" algorithm.

**Revendications**

1. Dispositif mobile (110) pour le transport automatisé d'un support de charge (170), le dispositif mobile (110) comprenant :

au moins un actionneur de déplacement (160) qui est conçu pour être commandé au moyen de données de commande (290) afin de déplacer le dispositif mobile (110), le dispositif mobile (110) étant conçu pour se déplacer et s'orienter par rapport au support de charge (170) à transporter au moyen de l'au moins un actionneur de déplacement (160) ;

un dispositif d'acquisition d'images (130) pour acquérir une pluralité d'images (210a) d'une partie d'un environnement du dispositif mobile (110) à différents instants ;

au moins un capteur LiDAR (140) pour acquérir des données LiDAR (210b) dans l'environnement du dispositif mobile (110) ; et

un processeur (120) qui est conçu pour mettre en œuvre un réseau neuronal (200) entraîné par apprentissage par renforcement, RL, le réseau neuronal (200) entraîné par RL étant conçu pour déterminer, sur la base de la pluralité d'images (210a), des données LiDAR (210b), d'une pluralité de données de commande antérieures (210c) et d'une pluralité de récompenses antérieures (210d) déterminées pour la pluralité de données de commande antérieures (210c), les données de commande (290) pour commander l'au moins un actionneur de déplacement (160) afin de déplacer le dispositif mobile (110).

2. Dispositif mobile (110) selon la revendication 1, dans lequel le processeur (120) est en outre conçu pour mettre en œuvre un autre réseau neuronal (200') entraîné par RL, cet autre réseau neuronal (200') entraîné par RL étant conçu pour déterminer une valeur Q (290') sur la base de la pluralité d'images (210a), des données LiDAR (210b), de la pluralité de données de commande antérieures (210c) et de la pluralité de récompenses antérieures (210d).

3. Dispositif mobile (110) selon la revendication 2, dans lequel le réseau neuronal (200) entraîné par RL comprend un sous-réseau (220) et l'autre réseau neuronal (200') entraîné par RL comprend le sous-réseau (220), lequel est conçu pour générer un vecteur de caractéristiques sur la base de la pluralité d'images (210a).

4. Dispositif mobile (110) selon la revendication 3, dans lequel le processeur (120) est conçu pour entraîner le sous-réseau (220) dans une première partie d'entraînement et pour entraîner le réseau neuronal (200) entraîné par RL et l'autre réseau neuronal (200') entraîné par RL dans une seconde partie d'entraînement.

5. Dispositif mobile (110) selon la revendication 4, dans lequel, dans la seconde partie d'entraînement, le processeur (120) est conçu pour entraîner le réseau neuronal (200) entraîné par RL au moyen de tâches qui sont sélectionnées sur la base de l'autre réseau neuronal (200') entraîné par RL.

6. Dispositif mobile (110) selon l'une quelconque des revendications 2 à 5, dans lequel le processeur (120) est en outre conçu pour mettre en œuvre un autre réseau neuronal (300), cet autre réseau neuronal (300) étant conçu pour déterminer, sur la base de la valeur Q (290'), une probabilité de réussite (360) des données de commande (290) pour commander l'au moins un actionneur de déplacement (160).

7. Dispositif mobile (110) selon la revendication 6, dans lequel l'autre réseau neuronal (300) est conçu pour déterminer, sur la base de la valeur Q (290') et d'un ou plusieurs paramètres géométriques (310), la probabilité de réussite (360) des données de commande (290) pour commander l'au moins un actionneur de déplacement (160).

8. Dispositif mobile (110) selon la revendication 6 ou 7, dans lequel le processeur (120) est conçu pour commander l'au moins un actionneur de déplacement (160) avec les données de commande (290) dans le cas où la probabilité de réussite (360) des données de commande (290) est supérieure à une valeur de seuil prédéfinie.

9. Dispositif mobile (110) selon l'une quelconque des revendications 6 à 8, dans lequel le processeur (120) est conçu pour amener le dispositif mobile (110) à l'arrêt dans le cas où la probabilité de réussite (360) des données de commande (290) est inférieure à une valeur de seuil prédéfinie.

10. Dispositif mobile (110) selon l'une quelconque des revendications précédentes, dans lequel le processeur (120) est conçu pour entraîner le réseau neuronal (200) entraîné par RL sur la base d'un algorithme "Soft Actor-Critic".

Fig. 1

EP 4 220 312 B1

Fig. 2a

Fig. 2b

EP 4 220 312 B1

Fig. 2c

Fig. 3

**EP 4 220 312 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019101917 A1

**In der Beschreibung aufgeführte Nicht-Patentliteratur**

- **VON MORAD et al.** Embodied Visual Navigation with Automatic Curriculum Learning in Real Environments. *IEEE Robotics and Automation Letters*, 2020